# EUROPÄISCHE PATENTANMELDUNG

(11) **EP 4 596 173 A1**
(43) Veröffentlichungstag der Anmeldung: **06.08.2025**
(21) Anmeldenummer: 24213315.5
(22) Anmeldetag: 15.11.2024
(51) Int. Cl.: B23Q 17/09, B23Q 17/24, G06V 10/00

(54) **VERFAHREN MIT EINEM WERKZEUGEINSTELL- UND/ODER WERKZEUGMESSGERÄT, WERKZEUGEINSTELL- UND/ODER WERKZEUGMESSGERÄT, WERKZEUGSPANNGERÄT UND COMPUTERPROGRAMMPRODUKT UND/ODER COMPUTERPROGRAMM-RECHENINFRASTRUKTUR**

(30) Priorität: 02.02.2024 DE 102024103025
(71) Anmelder: E. Zoller GmbH & Co. KG Einstell- und Messgeräte, 74385 Pleidelsheim (DE)
(72) Erfinder: Pfau, Christian, 74379 Ingersheim (DE); Ali M., Mansoory K., 74385 Pleidelsheim (DE)
(74) Vertreter: Daub, Thomas

(57) **Zusammenfassung**

Die Erfindung geht aus von einem Verfahren mit zumindest einem Werkzeugeinstell- und/oder Werkzeugmessgerät (10) zu einem Einstellen und/oder Vermessen von Werkzeugen (12, 12') in Werkzeugfuttern (14) oder mit zumindest einem Werkzeugspanngerät (16) zu einem Einspannen oder Ausspannen von Werkzeugen (12, 12') in oder aus Werkzeugfuttern (14), wobei in zumindest einem Erfassungsschritt (22) ein oder mehrere Objekte (18) in einem Sichtfeld einer Kamera (20) des Werkzeugeinstell- und/oder Werkzeugmessgeräts (10) oder des Werkzeugspanngeräts (16) erfasst werden, und wobei in zumindest einem Objekterkennungsschritt (24) ein Bilderkennungsalgorithmus auf das/die Objekt/e (18) umfassende Kameraaufnahmen der Kamera (20) angewendet wird.

Es wird vorgeschlagen, dass der Objekterkennungsschritt (24) zumindest zur Anwendung auf in der folgenden Liste genannte Objekte (18) speziell vorgesehen ist: Werkzeug (12, 12'), Werkzeugfutter (14), Werkzeugschneide (26), montiertes Komplettwerkzeug, Werkzeug- und/oder Werkzeugfutterpalette (30).

## Beschreibung

### Stand der Technik

Die Erfindung betrifft ein Verfahren nach dem Oberbegriff des Anspruchs 1, ein Werkzeugeinstell- und/oder Werkzeugmessgerät nach dem Oberbegriff des Anspruchs 20, ein Werkzeugspanngerät nach dem Oberbegriff des Anspruchs 21 und ein Computerprogrammprodukt und/oder eine Computerprogramm-Recheninfrastruktur nach dem Anspruch 22.

Es ist bereits ein Verfahren mit zumindest einem Werkzeugeinstell- und/oder Werkzeugmessgerät zu einem Einstellen und/oder Vermessen von Werkzeugen in Werkzeugfuttern oder mit zumindest einem Werkzeugspanngerät zu einem Einspannen oder Ausspannen von Werkzeugen in oder aus Werkzeugfuttern, wobei in zumindest einem Erfassungsschritt ein oder mehrere Objekte in einem Sichtfeld einer Kamera des Werkzeugeinstell- und/oder Werkzeugmessgeräts oder des Werkzeugspanngeräts erfasst werden, und wobei in zumindest einem Objekterkennungsschritt ein Bilderkennungsalgorithmus auf das/die Objekt/e umfassende Kameraaufnahmen der Kamera angewendet wird, vorgeschlagen worden.

Die Aufgabe der Erfindung besteht insbesondere darin, eine gattungsgemäße Vorrichtung mit vorteilhaften Eigenschaften hinsichtlich eines Bedienerkomforts bereitzustellen. Die Aufgabe wird erfindungsgemäß durch die Merkmale der unabhängigen Patentansprüche gelöst, während vorteilhafte Ausgestaltungen und Weiterbildungen der Erfindung den Unteransprüchen entnommen werden können.

### Vorteile der Erfindung

Die Erfindung geht aus von einem Verfahren, insbesondere einem computerimplementierten Verfahren, vorzugsweise einem computerimplementierten Objekterkennungsverfahren, mit zumindest einem Werkzeugeinstell- und/oder Werkzeugmessgerät zu einem Einstellen und/oder Vermessen von Werkzeugen in Werkzeugfuttern oder mit zumindest einem Werkzeugspanngerät zu einem Einspannen oder Ausspannen von Werkzeugen in oder aus Werkzeugfuttern, wobei in zumindest einem Erfassungsschritt ein oder mehrere Objekte in einem Sichtfeld einer Kamera des Werkzeugeinstell- und/oder Werkzeugmessgeräts oder des Werkzeugspanngeräts erfasst werden, und wobei in zumindest einem Objekterkennungsschritt ein Bilderkennungsalgorithmus auf das/die Objekt/e umfassende Kameraaufnahmen der Kamera angewendet wird.

Es wird vorgeschlagen, dass der Objekterkennungsschritt zumindest zur Anwendung auf in der folgenden Liste genannte Objekte, vorzugsweise auf eines oder mehrere in der folgenden Liste genannte Objekte und bevorzugt auf alle in der folgenden Liste genannte Objekte, speziell vorgesehen ist: Werkzeug, Werkzeugfutter, Werkzeugschneide, montiertes Komplettwerkzeug und Werkzeug- und/oder Werkzeugfutterpalette. Dadurch kann vorteilhaft ein Bedienerkomfort gesteigert werden. Vorteilhaft kann der Bediener bei der Bedienung des Werkzeugeinstell- und/oder Werkzeugmessgeräts und/oder des Werkzeugspanngeräts unterstützt werden. Dadurch kann die Bedienung vorteilhaft vereinfacht, beschleunigt und/oder betriebssicherer gemacht werden. Außerdem kann vorteilhaft eine die Bedienereingaben überprüfende Kontrollfunktion zur weiteren Erhöhung der Betriebssicherheit umgesetzt werden.

Unter einem "Werkzeugeinsteil- und/oder Werkzeugmessgerätgerät" soll insbesondere ein Gerät verstanden werden, welches zumindest dazu vorgesehen ist, zumindest eine Länge, zumindest einen Winkel, zumindest eine Kontur und/oder zumindest eine Außenform eines Werkzeugs zumindest teilweise zu erfassen und/oder einzustellen. Vorzugsweise weist das Werkzeugeinstell- und/oder Werkzeugmessgerätgerät eine Einstell- und/oder Messpräzision im Bereich von Mikrometern oder darunter auf. Unter einen "Werkzeugspanngerät" soll insbesondere ein Gerät verstanden werden, welches dazu vorgesehen ist, ein Werkzeug in ein Werkzeugfutter zu montieren und/oder ein Werkzeug aus einem Werkzeugfutter zu demontieren. Insbesondere bildet das Werkzeugspanngerät eine Werkzeugeinspann- und/oder Werkzeugausspanneinheit aus. Insbesondere ist das Werkzeugspanngerät dazu vorgesehen, einen Spannmechanismus eines Werkzeugfutters zu aktivieren, insbesondere einzustellen, und/oder den Spannmechanismus des Werkzeugfutters zu deaktivieren, insbesondere zu lösen. Beispielsweise kann das Werkzeugspanngerät als ein Schrumpfspanngerät ausgebildet sein. Alternative von dem Werkzeugspanngerät betätigbare Spannmechanismen wie ein Hydrodehn-Spannmechanismus, ein Spannzangen-Spannmechanismus, ein Überwurfmutter-Spannmechanismus, etc. sind jedoch ebenfalls denkbar. Die Werkzeuge sind insbesondere als Schaftwerkzeuge, vorzugsweise als Rotations-Schaftwerkzeuge, beispielsweise Bohrer, Fräser, Profilwerkzeuge und/oder Reibahlen ausgebildet, wobei vorzugsweise ein Schaft der Schaftwerkzeuge zu einer Montage in einer Werkzeugaufnahme vorgesehen ist. Unter einem "Werkzeugfutter" soll insbesondere ein Bauteil verstanden werden, welches zu einer Aufnahme eines Werkzeugs und einer Verbindung des Werkzeugs mit einer Maschine vorgesehen ist. Insbesondere ist das Werkzeugfutter als eine Schnittstelle zwischen Werkzeug und Maschine ausgebildet. Beispielsweise ist das Werkzeugfutter als ein Schrumpfspannfutter, als ein Hydrodehnfutter, als ein Pressspannfutter, als ein Spannzangenfutter oder dergleichen, ausgebildet. Unter "vorgesehen" soll insbesondere speziell programmiert, ausgelegt und/oder ausgestattet verstanden werden. Darunter, dass ein Objekt zu einer bestimmten Funktion vorgesehen ist, soll insbesondere verstanden werden, dass das Objekt diese bestimmte Funktion in zumindest einem Anwendungs- und/oder Betriebszustand erfüllt und/oder ausführt. Die Kamera ist insbesondere als eine Auflichtkamera des Werkzeugeinstell- und/oder Werkzeugmessgeräts oder des Werkzeugspanngeräts ausgebildet. Alternativ oder zusätzlich ist auch eine Verwendung einer Durchlichtkamera denkbar.

Vorzugsweise ist der Bilderkennungsalgorithmus ein Objekterkennungsalgorithmus. Der Objekterkennungsalgorithmus ist als ein dem Fachmann aus dem Stand der Technik bekannter Objekterkennungsalgorithmus ausgebildet. Eine Liste bekannter Objekterkennungsmethoden anhand von Bilddaten ist u.a. dem Onlinelexikon "Wikipedia" zu entnehmen (https://en.wikipedia.org/wiki/Outline of object recognition, Stand: Revision vom 30.10.2023 - 12:14Uhr).

Insbesondere ist ein speziell zur Anwendung auf einen bestimmten Objekttyp vorgesehener Bilderkennungsalgorithmus zumindest in der Lage, den entsprechenden Objekttyp von anderen Objekttypen zu unterscheiden. Vorzugsweise ist der speziell zur Anwendung auf den bestimmten Objekttyp vorgesehene Bilderkennungsalgorithmus zumindest in der Lage, unterschiedliche Objekte des entsprechenden Objekttyps voneinander zu unterscheiden und insbesondere zu kategorisieren. Die Kapazitäten des Bilderkennungsalgorithmus / Objekterkennungsalgorithmus gehen wesentlich über eine einfache Erkennung von Wandstärken, Größen, Längen, Breiten oder von Außenumrisskonturen hinaus. Die Werkzeugschneide ist insbesondere ein spanabhebender Teil eines Arbeitsbereichs eines Werkzeugs. Ein Komplettwerkzeug umfasst insbesondere eine speziell aufeinander abgestimmte und/oder zusammengehörige Kombination von Werkzeugfutter und Werkzeug, die insbesondere demontierbar ist. Eine Werkzeug- und/oder Werkzeugfutterpalette ist insbesondere als eine ebene Halteeinrichtung und/oder Lagereinrichtung zur Halterung und/oder Lagerung von Werkzeugen und/oder Werkzeugfuttern ausgebildet, welche vorzugsweise eine Mehrzahl an Spalten und/oder Reihen von Aufnahmeplätzen für Werkzeuge und/oder Werkzeugfutter umfasst.

In einem weiteren Aspekt der Erfindung, welcher für sich alleine genommen, oder auch in Kombination mit zumindest einem, insbesondere in Kombination mit einem, insbesondere in Kombination mit beliebig vielen der übrigen Aspekte der Erfindung betrachtet werden kann, wird vorgeschlagen, dass in dem Objekterkennungsschritt mittels des Bilderkennungsalgorithmus bestimmt wird, ob es sich bei dem/den von der Kamera erfassten Objekt/en jeweils um ein einzelnes Werkzeug, ein einzelnes Werkzeugfutter, eine Werkzeugschneide, ein montiertes Komplettwerkzeug oder eine Werkzeug- und/oder Werkzeugfutterpalette handelt, und wobei in zumindest einem Ausgabeschritt zumindest eine Information, insbesondere eine Identifikationsinformation, zu jedem bestimmten Objekt elektronisch oder visuell ausgegeben wird. Dadurch kann vorteilhaft ein hoher Benutzerkomfort erreicht werden. Vorteilhaft kann der Nutzer in der Bedienung des Werkzeugeinstell- und/oder Werkzeugmessgeräts und/oder des Werkzeugspanngeräts unterstützt werden, wodurch insbesondere eine Arbeitsgeschwindigkeit und/oder eine Betriebssicherheit erhöht werden kann. Insbesondere ist der Bilderkennungsalgorithmus / Objekterkennungsalgorithmus zu einer Einzelerkennung von Objekten eines oder mehrerer der genannten Objekttypen vorgesehen. Insbesondere ist der Bilderkennungsalgorithmus / Objekterkennungsalgorithmus zu einer Unterscheidung der genannten Objekttypen vorgesehen. Die ausgegebene Information ist insbesondere maschinenlesbar und/oder für den Bediener verständlich / interpretierbar. Eine maschinenlesbare Ausgabe umfasst insbesondere die digitale Ausgabe der Information als Code, welcher von einem Computerprogramm einlesbar / verstehbar ist. Die ausgegebene Information umfasst vorzugsweise eine Information über den erfassten Objekttyp, also über das erfasste Werkzeug, z.B. dessen Werkzeugtyp, dessen Bezeichnung und/oder dessen Kompatibilitäten mit Werkzeugfuttern, über das erfasste Werkzeugfutter, z.B. dessen Werkzeugfuttertyp, dessen Bezeichnung und/oder dessen Kompatibilitäten mit Werkzeugen und/oder Werkzeugmaschinen, über die erfasste Werkzeugschneide, z.B. dessen Schneidentyp, dessen Bezeichnung und/oder dessen Kompatibilität mit Werkzeugen, über das erfasste montierte Komplettwerkzeug, z.B. dessen Typ und/oder dessen Bezeichnung, und/oder über die erfasste Werkzeug- und/oder Werkzeugfutterpalette, z.B. dessen Palettentyp, dessen Bezeichnung, dessen Aufnahmeplatzanzahl, dessen Aufnahmeplatzdimensionierung(en) und/oder dessen Kompatibilitäten für bestimmte Werkzeuge, Werkzeugfutter, Werkzeugeinstell- und/oder Werkzeugmessgeräte und/oder Werkzeugspanngeräte. Vorteilhaft kann die Erkennung der Aufnahmeplatzanzahl und/oder der Aufnahmeplatzdimensionierung(en) der Werkzeugpalette / Werkzeugfutterpalette anhand einer einzelnen von der Kamera aufgezeichneten Kameraaufnahme vorgenommen werden. Dadurch kann vorteilhaft eine hohe Arbeitsgeschwindigkeit erreicht werden. Insbesondere ist zudem denkbar, dass eine Werkzeugpalette / Werkzeugfutterpalette und die darin eingelagerten Werkzeuge / Werkzeugfutter in dem Objekterkennungsschritt erfasst werden. Anhand dieser Informationen kann dann eine Zeit vorhergesagt werden, die das (automatisierte) Werkzeugeinstell- und/oder Werkzeugmessgerät und/oder das (automatisierte) Werkzeugspanngerät zu einer Abarbeitung der Werkzeugpalette / Werkzeugfutterpalette benötigt (z.B. unter Berücksichtigung von Arbeitszeiten der Gerätefunktionen und Handlingzeiten von Manipulatoren zum Transport der Werkzeuge und/oder Werkzeugfutter, wie Greifer, etc.). Dadurch kann vorteilhaft eine Arbeitsplanung, eine Effizienz und/oder eine Arbeitsgeschwindigkeit wesentlich verbessert werden. Es ist denkbar, dass eine Palette zur Aufnahme von Werkzeugen und Werkzeugfuttern gleichzeitig vorgesehen ist, also Aufnahmeplätze für Werkzeuge und Werkzeugfutter aufweist. Der Objekterkennungsschritt kann auch auf derartige Paletten (Werkzeug- und Werkzeugfutterpaletten) angewendet werden. In diesem Fall ist der Bilderkennungsalgorithmus dazu vorgesehen, eine Unterscheidung zwischen Aufnahmeplatztypen der Palette vorzunehmen.

Zudem wird vorgeschlagen, dass in dem Objekterkennungsschritt eine Objektkategorie ermittelt wird, welche zumindest einen Werkzeugtyp eines als Werkzeug erkannten Objekts, einen Werkzeugschneidentyp eines als Werkzeugschneide erkannten Objekts, einen Werkzeugfuttertyp eines als Werkzeugfutter erkannten Objekts, einen Komplettwerkzeugtyp eines als Komplettwerkzeug erfassten Objekts umfasst und/oder einen Palettentyp eines als Werkzeug- und/oder Werkzeugfutterpalette erfassten Objekts und dass in dem Ausgabeschritt der Werkzeugtyp, der Werkzeugschneidentyp, der Werkzeugfuttertyp, der Komplettwerkzeugtyp und/oder der Palettentyp zu jedem bestimmten Objekt elektronisch oder visuell ausgegeben wird. Dadurch kann vorteilhaft ein hoher Benutzerkomfort erreicht werden. Vorteilhaft kann der Nutzer in der Bedienung des Werkzeugeinstell- und/oder Werkzeugmessgeräts und/oder des Werkzeugspanngeräts unterstützt werden, wodurch insbesondere eine Arbeitsgeschwindigkeit und/oder eine Betriebssicherheit erhöht werden kann. Insbesondere umfassen die verschiedenen Werkzeugtypen, Werkzeugschneidentypen, Werkzeugfuttertypen, Komplettwerkzeugtypen und/oder Palettentypen auch jeweils Objekte identischer Klassen, jedoch unterschiedlicher Größen. Beispielsweise bilden also auch zwei sonst identische Schrumpfspannfutter unterschiedlicher Größen, also für unterschiedliche große Werkzeugschäfte, unterschiedliche von dem Bilderkennungsalgorithmus unterscheidbare Werkzeugfuttertypen aus. Die jeweiligen Typen können beispielsweise über klar unterscheidbare Bezeichnungen charakterisiert sein. Die klar unterscheidbaren Bezeichnungen können dann elektronisch oder visuell ausgegeben werden.

Außerdem wird vorgeschlagen, dass das Verfahren einen Auswertungsschritt umfasst, in dem eine Kompatibilität oder Inkompatibilität von zumindest zweien der in dem Objekterkennungsschritt erkannten Objekte zueinander, z.B. eines Werkzeugs und eines Werkzeugfutters zueinander, eines Werkzeugs und einer Werkzeugpalette zueinander, eines Werkzeugfutters und einer Werkzeugfutterpalette zueinander, eines Werkzeugs und einer Werkzeugschneide zueinander, etc., ermittelt wird. Dadurch kann vorteilhaft eine hohe Betriebssicherheit erreicht werden. Vorteilhaft kann ein durch Unaufmerksamkeiten von menschlichen Bedienern erzeugtes Risiko von Bedienfehlern verringert werden. Beispielsweise kann bei einer Erkennung einer Inkompatibilität ein/e maschinenlesbare/s und/oder für den Bediener sensorisch wahrnehmbare/s Warnmeldung und/oder Warnsignal ausgegeben werden. Bei einer Erkennung einer Kompatibilität oder Inkompatibilität von Werkzeug und Werkzeugfutter zueinander kann beispielsweise ermittelt werden, ob ein Werkzeugschaft des Werkzeugs in eine Aufnahmeöffnung des Werkzeugfutters passt oder nicht. Bei einer Erkennung einer Kompatibilität oder Inkompatibilität von Werkzeug und Werkzeugschneide zueinander kann beispielsweise ermittelt werden, ob eine Werkzeugschneide an eine Aufnahmestelle für demontierbare Werkzeugschneiden des Werkzeugs passt oder nicht. Bei einer Erkennung einer Kompatibilität oder Inkompatibilität von Werkzeug / Werkzeugfutter und Werkzeugpalette / Werkzeugfutterpalette zueinander kann beispielsweise ermittelt werden, ob ein Werkzeug / ein Werkzeugfutter in einen Aufnahmeplatz der Werkzeugpalette / der Werkzeugfutterpalette passt oder nicht.

Wenn dabei in dem Auswertungsschritt ermittelt wird, ob es sich bei zumindest zwei der in dem Objekterkennungsschritt erkannten zueinander kompatiblen Objekte um miteinander lösbar verbindbare Objekte handelt, kann vorteilhaft eine Fehlverbindung verhindert und somit ein Beschädigungsrisiko für die Objekte verringert werden. Beispielsweise sind Werkzeug und Werkzeugfutter miteinander lösbar verbindbar. Beispielsweise sind Werkzeug und Werkzeugpalette miteinander lösbar verbindbar. Beispielsweise sind Werkzeugfutter und Werkzeugfutterpalette miteinander lösbar verbindbar. Beispielsweise sind Werkzeugschneide und Werkzeug miteinander lösbar verbindbar.

Wenn nun also in dem Auswertungsschritt erkannt wird, ob ein Werkzeugschaft eines als einzelnes Werkzeug erkannten Objekts zu einem als einzelnes Werkzeugfutter erkannten weiteren Objekt kompatibel ist, kann vorteilhaft eine Fehlkombination von Werkzeug und Werkzeugfutter und somit eine Beschädigung von Werkzeug und/oder Werkzeugfutter vermieden werden.

Wenn nun also in dem Auswertungsschritt erkannt wird, ob ein als Werkzeugschneide, insbesondere als Wendeschneidplatte, erkanntes Objekt zu einem als einzelnes Werkzeug erkannten weiteren Objekt kompatibel ist, kann vorteilhaft eine Fehlkombination von Werkzeug und Werkzeugschneide und somit eine Beschädigung von Werkzeug und/oder Werkzeugschneide vermieden werden.

Wenn außerdem in dem Auswertungsschritt erkannt wird, ob ein Objekt, beispielsweise ein als Werkzeug, als Werkzeugfutter oder als Werkzeugschneide erkanntes Objekt, zu einer dem Werkzeugeinstell- und/oder Werkzeugmessgerät oder dem Werkzeugspanngerät vorliegenden Arbeitsplanung, beispielsweise eines Werkzeugverwaltungssystems, passt, kann vorteilhaft eine Fehleinplanung der Objekte verhindert werden. Dadurch kann vorteilhaft ein Arbeitsergebnis des Werkzeugeinstell- und/oder Werkzeugmessgeräts oder des Werkzeugspanngeräts optimiert werden. Zudem kann vorteilhaft ein Betrieb des Werkzeugeinstell- und/oder Werkzeugmessgeräts oder des Werkzeugspanngeräts optimiert, insbesondere beschleunigt und/oder erleichtert werden. Beispielsweise kann anhand der Übermittlung der Information über das erkannte Objekt an das Werkzeugeinstell- und/oder Werkzeugmessgerät oder an das Werkzeugspanngerät bereits eine Voreinstellung des Werkzeugeinstell- und/oder Werkzeugmessgeräts oder des Werkzeugspanngeräts vorgenommen werden, welche dann z.B. von dem jeweiligen Bediener nur noch kontrolliert und bestätigt werden muss. Die Arbeitsplanung, insbesondere das Werkzeugverwaltungssystem, umfasst beispielsweise eine geplante Abfolge von in dem jeweiligen Gerät bearbeiteten Objekten.

Es wird vorgeschlagen, dass dadurch in dem Ausgabeschritt ein Vorschlag für eine Änderung der Arbeitsplanung oder eine direkte Änderung der Arbeitsplanung ausgegeben wird, wenn in dem Auswertungsschritt eine Nicht-Übereinstimmung des aktuell erkannten Objekts mit der vorliegenden Arbeitsplanung ermittelt wurde. Dadurch kann vorteilhaft eine Unterbrechung eines Betriebsablaufs vermieden werden. Vorteilhaft kann dadurch eine hohe Effizienz erreicht werden.

Alternativ oder zusätzlich dazu wird vorgeschlagen, dass in dem Ausgabeschritt eine Warnmeldung ausgegeben wird und/oder ein Betrieb des Werkzeugspanngeräts blockiert wird, wenn laut der Arbeitsplanung das aktuell vorliegende Werkzeugfutter ein Warmschrumpffutter sein müsste oder wenn laut dem Arbeitsplan ein anschließendes Warmschrumpfen des aktuell vorliegenden Werkzeugfutters geplant ist, in dem Objekterkennungsschritt jedoch ein anderer Werkzeugfuttertyp, insbesondere der Werkzeugfuttertyp Hydrodehn-Spannfutter, ermittelt wurde. Dadurch kann vorteilhaft eine wesentliche Erhöhung einer Betriebssicherheit erreicht werden. Vorteilhaft kann verhindert werden, dass Werkzeugfutter, die eine Erwärmung nicht aushalten können, einem Warmschrumpfvorgang ausgesetzt werden. Hydrodehn-Spannfutter umfassen beispielsweise mit Hydrauliköl oder dergleichen gefüllte abgeschlossene Kammern, welche bei einer starken Erhitzung der Hydrodehn-Spannfutter explodieren können. Derartige Explosionen können bei sich in einer Nähe aufhaltenden Personen zu Verletzungen wie Wunden, Verbrennungen oder Hörbeeinträchtigungen (Knalltrauma), etc. führen. Durch eine Verringerung eines Risikos derartiger Explosionen in Werkanlagen, in denen unterschiedliche Werkzeugfuttertypen verwendet werden, kann daher vorteilhaft ein Verletzungs- und/oder Beschädigungsrisiko wesentlich verringert werden. Hydrodehn-Spannfutter und Schrumpfspannfutter, die für ähnliche oder gleiche Werkzeuge ausgelegt sind, lassen sich häufig nicht durch eine alleinige Überprüfung von Einzelmerkmalen wie Wandstärken, Größen, Längen, Breiten oder Außenumrisskonturen erkennen, so dass ein Einsatz der beschriebenen speziell vorgesehenen Bilderkennungsalgorithmen und/oder Objekterkennungsalgorithmen, insbesondere unterstützt von künstlicher Intelligenz bzw. maschinellem Lernen, hier mit sehr großen Sicherheitsverbesserungen verbunden ist.

Zusätzlich wird vorgeschlagen, dass die Objektkategorie zumindest teilweise anhand eines Nicht-Vorhandenseins bestimmter Merkmale, insbesondere bestimmter Farbmerkmale und/oder bestimmter Schwarz-Weiß-Muster oder Farbmuster, bestimmt wird. Dadurch kann vorteilhaft eine besonders zuverlässige und/oder besonders einfache Bestimmung der Objektkategorie ermöglicht werden. Beispielsweise kann eine Objektkategorie anhand eines Nicht-Vorhandenseins eines QR-Codes, insbesondere eines QR-Codes mit einer bestimmten von weiß verschiedenen Hintergrundfarbe, z.B. gelb wie der sogenannte "zid-Code" der Firma E. ZOLLER GmbH & Co. KG Einstell- und Messgeräte (Pleidelsheim, Deutschland) erkannt werden. Beispielsweise kann eine Objektkategorie anhand eines Nicht-Vorhandenseins eines ID-Chips, wie z.B. eines RFID-Chips, insbesondere eines einen quadratischen schwarzen Kasten ausbildenden RFID-Chips der Firma Balluff GmbH (Neuhausen auf den Fildern, Deutschland), erkannt werden. Insbesondere trägt die Ermittlung des Nicht-Vorhandenseins zu der Bestimmung der Objektkategorie neben einem oder mehreren weiteren Erkennungsmerkmalen bei.

Zusätzlich wird vorgeschlagen, dass die Objektkategorie zumindest teilweise anhand einer Farberkennung, insbesondere einer Werkzeugschneiden-Farbe, einer Werkzeugfutter-Farbe, einer Werkzeug-Farbe oder einer Komplettwerkzeug-Farbe, bestimmt wird. Dadurch kann vorteilhaft eine besonders zuverlässige und/oder besonders einfache Bestimmung der Objektkategorie ermöglicht werden. Insbesondere trägt die Farberkennung zu der Bestimmung der Objektkategorie neben einem oder mehreren weiteren Erkennungsmerkmalen bei.

Zusätzlich wird vorgeschlagen, dass die Objektkategorie zumindest teilweise anhand einer physischen Abmessung bestimmt wird. Dadurch kann vorteilhaft eine besonders zuverlässige und/oder besonders einfache Bestimmung der Objektkategorie ermöglicht werden. Insbesondere trägt die Bestimmung der physischen Abmessung zu der Bestimmung der Objektkategorie neben einem oder mehreren weiteren Erkennungsmerkmalen bei.

Zusätzlich wird vorgeschlagen, dass die Objektkategorie zumindest teilweise anhand eines Auffindens typischer optischer Verschleißerscheinungen und/oder typischer Verschmutzungen des Objekts, insbesondere der Werkzeugschneide, des Werkzeugfutters oder des Werkzeugs, bestimmt wird. Dadurch kann vorteilhaft eine besonders zuverlässige und/oder besonders einfache Bestimmung der Objektkategorie ermöglicht werden. Insbesondere trägt das Auffinden typischer optischer Verschleißerscheinungen und/oder typischer Verschmutzungen des Objekts zu der Bestimmung der Objektkategorie neben einem oder mehreren weiteren Erkennungsmerkmalen bei. Beispielsweise kann die optische Verschleißerscheinung eine durch ein (z.B. induktives) Erwärmen von Schrumpfbereichen von Warmschrumpffuttern erzeugte Verfärbung einer Oberfläche sein. Diese Verfärbung kann dann zu der Erkennung von Warmschrumpffuttern, insbesondere mit besonders hoher Sicherheit, beitragen. Beispielsweise kann die optische Verschleißerscheinung eine durch eine typische Verwendung des Objekts erzeugte charakteristische Oberflächenveränderung, z.B. Kratzspur oder dergleichen, sein. Beispielsweise kann die typische Verschmutzung eine durch ein bei der Verwendung des Objekts eingesetztes Hilfsmittel, wie z.B. einem Schmiermittel oder dergleichen erzeugte Verschmutzung sein. Beispielsweise kann die typische Verschmutzung ein an einer typischen Stelle des Objekts aufgefundener Etikett- oder Beschriftungsrest sein, der bei einer üblichen Verwendung des Objekts zumindest zweitweise auf das Objekt aufgebracht ist.

Überdies wird vorgeschlagen, dass in zumindest einem Arbeitsschritt einem Nutzer des Werkzeugeinstell- und/oder Werkzeugmessgeräts oder des Werkzeugspanngeräts automatisch eine zu der oder den ermittelten Objektkategorien des oder der aktuell vorliegenden Objekte passende, vorzugsweise bereits zumindest teilausgefüllte, Bedienmaske und/oder Bedienoberfläche des Werkzeugeinstell- und/oder Werkzeugmessgeräts oder des Werkzeugspanngeräts angezeigt wird. Dadurch kann vorteilhaft ein Bedienkomfort, eine Arbeitsgeschwindigkeit und/oder eine Betriebssicherheit deutlich erhöht werden.

Wenn der Bilderkennungsalgorithmus als ein speziell auf die Erkennung von Werkzeugen, Werkzeugfuttern, Werkzeugschneiden, montierten Komplettwerkzeugen und/oder Werkzeug- und/oder Werkzeugfutterpaletten trainierter Algorithmus maschinellen Lernens, insbesondere unter Anwendung bekannter Deep-Learning-Techniken, ausgebildet ist, kann vorteilhaft eine besonders hohe Präzision der Objekterkennung erreicht werden. Dadurch können die bereits vorbeschriebenen vorteilhaften Effekte, wie Geschwindigkeit, Betriebssicherheit und/oder Bedienkomfort weiter verstärkt werden. Der Algorithmus maschinellen Lernens ist vorzugsweise speziell auf die Erkennung von Werkzeugen, insbesondere aus einer festgelegten Gruppe von Werkzeugen, von Werkzeugfuttern, insbesondere aus einer festgelegten Gruppe von Werkzeugfuttern, von montierten Komplettwerkzeugen, insbesondere aus einer festgelegten Gruppe von montierten Komplettwerkzeugen und/oder von Werkzeug- und/oder Werkzeugfutterpaletten, insbesondere aus einer festgelegten Gruppe von Werkzeug- und/oder Werkzeugfutterpaletten, trainiert. Der Algorithmus maschinellen Lernens ist vorzugsweise ein auf eine Erkennung von Objekten aus Kameraaufnahmen spezialisierter Algorithmus maschinellen Lernens. Die Objekterkennung aus Bildern ist eine der Paradedisziplinen maschinellen Lernens, so dass das Training und/oder die Anwendung entsprechender Algorithmen maschinellen Lernens im Bereich des Fachwissens des Fachmanns liegt (siehe u.a. den bereits weiter oben referenzierten Artikel des Online-Lexikons Wikipedia). Wenn der, insbesondere auf einer Anwendung einer Deep-Learning-Technik basierende, trainierte Algorithmus maschinellen Lernens ein CNN (Convolutional Neural Network)-Algorithmus (faltendes neuronales Netz) ist, können insbesondere Vorteile bei einer Verarbeitung größerer Datenmengen im Zuge der Objekterkennung anhand der Kameraaufnahmen erreicht werden. Zudem können dadurch auch Vorteile bei einer Objekterkennung von suboptimalen Kameraaufnahmen, die Bildverzerrungen und/oder unterschiedliche Beleuchtungsverhältnisse aufweisen, erreicht werden. Außerdem kann ein Speicherplatzbedarf im Vergleich zu anderen neuronalen Netzen vorteilhaft gering gehalten werden. Beispielsweise kann einer der in den folgenden Veröffentlichungen beschriebenen bekannten CNN-Algorithmen in dem Werkzeugidentifikationsverfahren eingesetzt werden: a) AlexNet: Alex Krizhevsky, Imagenet classification with deep convolutional neural networks, Communications of the ACM 60.6, pg. 84-90 (2017); b) MobileNet: Andrew G. Howard, MobileNets: Efficient Convolutional Neural Networks for Mobile Vision Applications, CoRR, abs/1704.04861, (2017); c) Xception : Francois Chollet, Xception: Deep Learning with Depthwise Separable Convolutions, CoRR, abs/1610.02357, (2016); d) LeCun Y, Bengio Y, Hinton G (2015) Deep learning; Nature 521 :436{444, DOI 10.1038/naturel4539; e) Lin H, Li B, Wang X, Shu Y, Niu S (2019); Automated defect inspection of LED chip using deep convolutional neural network; J Intell Manuf; 30:2525{2534, DOI 10.1007/sl0845-018-1415-x; f) Fu G, Sun P, Zhu W, Yang J, Cao Y, Yang MY, Cao Y (2019); A deep-learning-based approach for fast and robust steel surface defects classification; Opt Laser Eng 121:397{405, DOI 10.1016/j.optlaseng.2019.05.005; g) Lee KB, Cheon S, Kim CO (2017) A Convolutional Neural Network for Fault Classification and Diagnosis in Semiconductor Manufacturing Processes; IEEE T Semiconduct M 30: 135{142, DOI 10.1109/TSM.2017.2676245; h) Goncalves DA, Stemmer MR, Pereira M (2020) A convolutional neural network approach on bead geometry estimation for a laser cladding system; Int J Adv Manuf Tech 106:1811 {1821, DOI 10.1007/s00170-019-04669-z; i) Karatas A, Kölsch D, Schmidt S, Eier M, Seewig J (2019) Development of a convolutional autoencoder using deep neuronal networks for defect detection and generating ideal references for cutting edges; Munich, Germany, DOI 10.1117/12.2525882;j) Stahl J, Jauch C (2019) Quick roughness evaluation of cut edges using a convolutional neural network; In: Proceedings SPIE 11172, Munich, Germany, DOI 10.1117/12.2519440; oder k) ein CNN des unter dem Namen "TensorFlow" bekannten Open Source Frameworks. Alternative CNN-Algorithmen, die dem Fachmann bekannt sind, wie z.B. Region Proposals (R-CNN, Fast R-CNN, Faster R-CNN), Detectron, Single Shot MultiBox Detector (SSD) oder You Only Look Once (YOLO, beispielsweise in der zum Anmeldezeitpunkt lizenzierbaren Versionsnummer 8), etc. sind selbstverständlich ebenfalls denkbar. Zur Anwendung vieler dieser Algorithmen maschinellen Lernens sind einfache Open-Source-Lösungen verfügbar (vgl. Der oben bereits referenzierte Artikel aus dem Online-Lexikon "Wikipedia"). Insbesondere wird der trainierte Algorithmus maschinellen Lernens von einer Recheneinheit ausgeführt, welche Teil des Werkzeugeinstell- und/oder Werkzeugmessgeräts oder des Werkzeugspanngeräts sein kann oder welche getrennt davon angeordnet sein kann. Unter einer "Recheneinheit" soll insbesondere eine Einheit mit einem Informationseingang, einer Informationsverarbeitung und einer Informationsausgabe verstanden werden. Vorteilhaft weist die Recheneinheit zumindest einen Prozessor, einen Speicher, Ein- und Ausgabemittel, weitere elektrische Bauteile, ein Betriebsprogramm, Regelroutinen, Steuerroutinen und/oder Berechnungsroutinen auf. Vorzugsweise sind die Bauteile der Recheneinheit auf einer gemeinsamen Platine angeordnet und/oder vorteilhaft in einem gemeinsamen Gehäuse angeordnet. Alternativ kann die Recheneinheit jedoch auch als eine verteilte Recheneinheit, wie z.B. eine Cloud ausgebildet sein. Insbesondere umfasst der trainierte Algorithmus maschinellen Lernens einen Objektklassifizierungsalgorithmus.

Der trainierte Algorithmus maschinellen Lernens ist vorzugsweise im Vorfeld, insbesondere vor dem Einsatz in dem beschriebenen Verfahren, speziell auf die Durchführung des Objekterkennungsschritts, insbesondere für die Anwendung auf die genannten Objekte, für die Erkennung der genannten Objekte, für die Erkennung der genannten Objektkategorien und/oder für die Erkennung der genannten Kompatibilitäten und/oder Inkompatibilitäten trainiert worden ("Offline Learning"). Dieses initiale Training findet vorzugsweise in einem dem Verfahren vorangehenden initialen Trainingsschritt oder Offline-Trainingsschritt statt. In dem Offline Trainingsschritt werden zunächst eine Vielzahl von Kameraaufnahmen der für die Anwendung des Objekterkennungsschritts vorgesehenen Werkzeuge, Werkzeugfutter, Werkzeugschneiden, montierten Komplettwerkzeuge und/oder Werkzeug- und/oder Werkzeugfutterpaletten erzeugt, vorzugsweise aus unterschiedlichen Perspektiven, jedoch insbesondere zumindest aus der Perspektive, die die Kamera auch im späteren Einsatz einnimmt. In diesen Kameraaufnahmen werden vorzugsweise dann Grenzen um jedes dieser darin enthaltenen Objekte gezogen. Dies kann beispielsweise manuell geschehen. Jeder der gezogenen Grenzen wird dann vorzugsweise ein Label zugeordnet. Die derart bearbeiteten Kameraaufnahmen werden dann vorzugsweise in drei Gruppen aufgeteilt: eine Trainiergruppe, eine Validiergruppe und eine Testgruppe. Anschließend werden die Gruppen von bearbeiteten Kameraaufnahmen in den, insbesondere auf eine Objekterkennung spezialisierten, Algorithmus maschinellen Lernens, z.B. YOLOv8, eingegeben. Der Algorithmus maschinellen Lernens führt dann, insbesondere in bekannter Weise, basierend auf dieser Eingabe ein Offline-Training durch und wird dadurch insbesondere zu dem Bilderkennungsalgorithmus und/oder Objekterkennungsalgorithmus, der den beanspruchten / vorbeschriebenen Objekterkennungsschritt durchführen kann.

Zudem wird vorgeschlagen, dass das Verfahren einen Trainierschritt umfasst, in welchem der Algorithmus maschinellen Lernens durch eine, die in dem Ausgabeschritt ausgegebene Information bestätigende, korrigierende oder dementierende Rückmeldung, insbesondere Bedienerrückmeldung, weiter trainiert wird ("Online Learning"). Dadurch kann vorteilhaft eine besonders hohe und insbesondere im Verlauf der Verfahrensanwendung weiter optimierte Objekterkennung erzielt werden. Vorteilhaft können dadurch die vorgenannten Vorteile der Objekterkennung weiter verstärkt werden. Es ist denkbar, dass zur Erfassung der Rückmeldung dem Bediener von dem Werkzeugeinstell- und/oder Werkzeugmessgerät oder dem Werkzeugspanngerät, insbesondere in dem Ausgabeschritt, die ermittelte Information über das Objekt angezeigt wird und ein Fortfahren oder (unverändertes) Bestätigen der Angabe des Bedieners als eine positive (bestätigende) Rückmeldung an den Algorithmus maschinellen Lernens angesehen wird, während eine Überarbeitung der angezeigten Informationen oder eine Aufforderung zur Wiederholung der Objekterkennung als eine negative (korrigierende oder dementierende) Rückmeldung an den Algorithmus maschinellen Lernens angesehen wird. Anhand dieser positiven und negativen Rückmeldungen wird dann ein kontinuierliches Lernen / Optimieren des Algorithmus maschinellen Lernens durchgeführt.

Weiterhin wird vorgeschlagen, dass der Algorithmus maschinellen Lernens eine Anomalie-Erkennungsfunktion zur Erkennung von, insbesondere optisch erkennbaren, Anomalien bei den während dem Erfassungsschritt im Sichtfeld der Kamera erfassten Objekten aufweist. Dadurch kann vorteilhaft eine hohe Betriebssicherheit erreicht werden. Es ist denkbar, dass bei einer Erkennung einer Anomalie ein Arbeitsplan, z.B. eines Werkzeugverwaltungssystems, geändert wird oder dass ein Betrieb des Werkzeugeinstell- und/oder Werkzeugmessgeräts oder des Werkzeugspanngeräts pausiert wird, bis die Anomalie durch einen Bediener geprüft wurde. Eine Anomalie kann beispielsweise durch eine unerwartete oder besonders große Verschmutzung ausgebildet sein. Eine Anomalie kann beispielsweise durch ein Klebeetikett oder einen Rest eines teilweise entfernten Klebeetiketts oder durch Kleberrückstände eines Klebeetiketts ausgebildet sein. Insbesondere im Fall eines Schrumpfspannfutters kann eine derartige Anomalie im Schrumpfbereich zu wesentlichen Beschädigungen des Schrumpfspannfutters führen (z.B. durch ein Verbrennen / Einbrennen der Verschmutzung). Eine Anomalie kann beispielsweise durch eine Beschädigung des Objekts, wie z.B. ein Riss, ein Ausbruch, eine Verformung, ein Fehlen eines Teils, etc., ausgebildet sein.

Außerdem wird vorgeschlagen, dass die zur Durchführung des Erfassungsschritts verwendete Kamera zusätzlich für die Durchführung wenigstens einer Kernaufgabe des Werkzeugeinstell- und/oder Werkzeugmessgeräts oder des Werkzeugspanngeräts verwendet wird. Dadurch kann vorteilhaft eine hohe Effizienz und/oder eine Kostengünstigkeit erreicht werden. Vorteilhaft kann ein synergistischer Zusatzeffekt zu der bereits vorhandenen Kamera hinzugefügt werden. Die zur Durchführung des Erfassungsschritts verwendete Kamera des Werkzeugeinstell- und/oder Werkzeugmessgeräts ist insbesondere als die Kamera, vorzugsweise Auflichtkamera, ausgebildet, welche auch für eine Vermessung von Werkzeugen, Werkzeugfuttern und/oder Komplettwerkzeugen durch das Werkzeugeinstell- und/oder Werkzeugmessgerät vorgesehen ist.

Ferner wird ein Werkzeugeinstell- und/oder Werkzeugmessgerät mit zumindest einer Kamera, insbesondere einer Einstell- und/oder Messkamera, und mit zumindest einer Recheneinheit vorgeschlagen, wobei zumindest die Recheneinheit zumindest mit Hilfe der Kamera, insbesondere der Einstell- und/oder Messkamera, zu einer Durchführung des vorbeschriebenen Verfahrens, insbesondere des computerimplementierten Verfahrens, vorzugsweise des computerimplementierten Objekterkennungsverfahrens, vorgesehen ist. Alternativ oder zusätzlich dazu wird ein Werkzeugspanngerät mit zumindest einer Kamera, insbesondere einer Einstell- und/oder Messkamera, und mit zumindest einer Recheneinheit vorgeschlagen, wobei zumindest die Recheneinheit zumindest mit Hilfe der Kamera, insbesondere der Einstell- und/oder Messkamera, zu einer Durchführung des vorbeschriebenen Verfahrens, insbesondere des computerimplementierten Verfahrens, vorzugsweise des computerimplementierten Objekterkennungsverfahrens, vorgesehen ist. Dadurch kann vorteilhaft ein Bedienerkomfort gesteigert werden. Vorteilhaft kann der Bediener bei der Bedienung des Werkzeugeinstell- und/oder Werkzeugmessgeräts und/oder des Werkzeugspanngeräts unterstützt werden.

Zudem wird ein Computerprogrammprodukt und/oder eine Computerprogramm-Recheninfrastruktur, umfassend Befehle, die bei einer Ausführung des Computerprogramms durch eine Recheneinheit, vorzugsweise des Werkzeugeinstell- und/oder Werkzeugmessgeräts oder des Werkzeugspanngeräts, diese veranlassen, die Schritte des vorbeschriebenen Verfahrens, insbesondere des computerimplementierten Verfahrens, vorzugsweise des computerimplementierten Objekterkennungsverfahrens, insbesondere mit dem Algorithmus maschinellen Lernens, auszuführen, vorgeschlagen. Dadurch kann vorteilhaft ein Bedienerkomfort gesteigert werden. Vorteilhaft kann der Bediener bei der Bedienung des Werkzeugeinstell- und/oder Werkzeugmessgeräts und/oder des Werkzeugspanngeräts unterstützt werden.

Das erfindungsgemäße Verfahren, das erfindungsgemäße Werkzeugeinstell- und/oder Werkzeugmessgerät, das erfindungsgemäße Werkzeugspanngerät und das erfindungsgemäße Computerprogrammprodukt und/oder die erfindungsgemäße Computerprogramm-Recheninfrastruktur sollen hierbei nicht auf die oben beschriebene Anwendung und Ausführungsform beschränkt sein. Insbesondere kann das erfindungsgemäße Verfahren, das erfindungsgemäße Werkzeugeinstell- und/oder Werkzeugmessgerät, das erfindungsgemäße Werkzeugspanngerät und das erfindungsgemäße Computerprogrammprodukt und/oder die erfindungsgemäße Computerprogramm-Recheninfrastruktur zu einer Erfüllung einer hierin beschriebenen Funktionsweise eine von einer hierin genannten Anzahl von einzelnen Elementen, Bauteilen und Einheiten abweichende Anzahl aufweisen.

### Zeichnungen

Weitere Vorteile ergeben sich aus der folgenden Zeichnungsbeschreibung. In den Zeichnungen ist ein Ausführungsbeispiel der Erfindung dargestellt. Die Zeichnungen, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:
- Fig. 1: eine schematische perspektivische Darstellung eines Werkzeugeinstell- und/oder Werkzeugmessgeräts zur Durchführung eines Verfahrens,
- Fig. 2: eine schematische perspektivische Darstellung eines Werkzeugspanngeräts zur Durchführung des Verfahrens,
- Fig. 3: eine schematische perspektivische Darstellung eines als Abwälzfräser ausgebildeten beispielhaften Werkzeugs,
- Fig. 4: eine schematische perspektivische Darstellung einer Wendeschneidplatte mit einer Werkzeugschneide,
- Fig. 5: eine schematische Draufsicht auf eine beispielhafte Werkzeug- und/oder Werkzeugfutterpalette und
- Fig. 6: ein schematisches Ablaufdiagramm des Verfahrens.

### Beschreibung des Ausführungsbeispiels

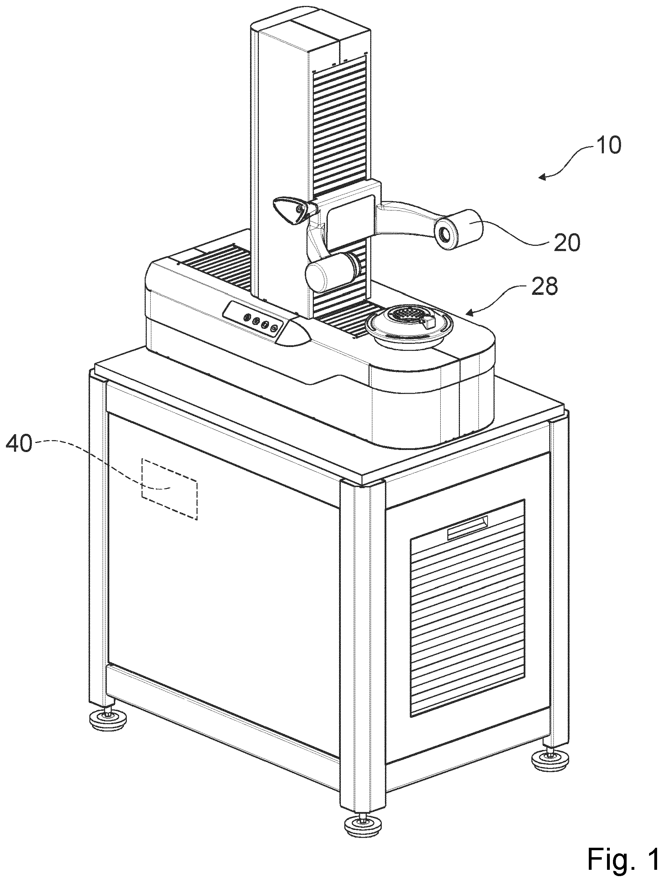

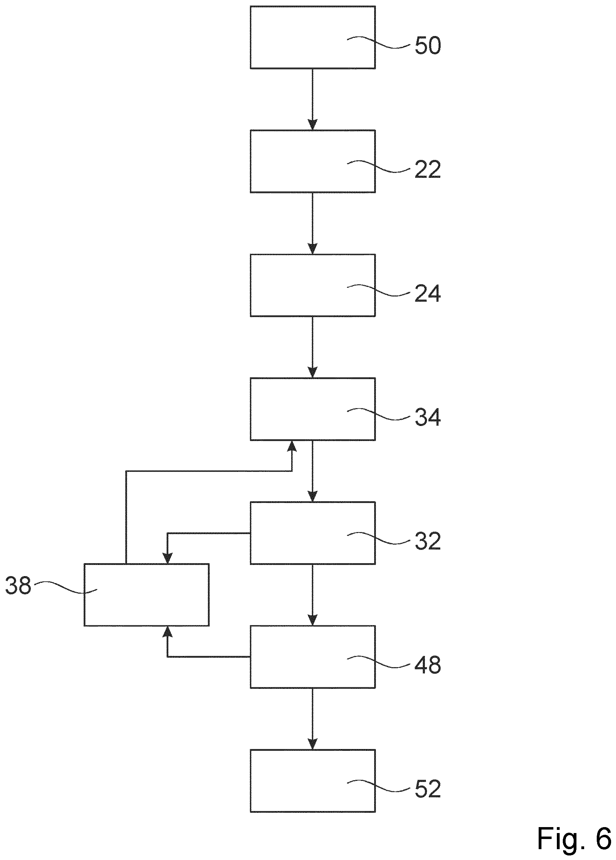

Die Figur 1 zeigt eine schematische perspektivische Darstellung eines Werkzeugeinstell- und/oder Werkzeugmessgeräts 10. Das Werkzeugeinstell- und/oder Werkzeugmessgerät 10 weist eine Kamera 20 auf. Die Kamera 20 bildet eine Einstell- und/oder Messkamera des Werkzeugeinstell- und/oder Werkzeugmessgeräts 10. Die Kamera 20 ist zumindest zu einer Durchführung eines Messverfahrens / einer Vermessungsfunktion des Werkzeugeinstell- und/oder Werkzeugmessgeräts 10 vorgesehen. Die Kamera 20 ist eine Auflichtkamera. Das Werkzeugeinstell- und/oder Werkzeugmessgerät 10 weist eine Halteeinrichtung 28 auf. Das Werkzeugeinstell- und/oder Werkzeugmessgerät 10 weist eine Recheneinheit 40, insbesondere einen Rechner, auf. Die Recheneinheit 40 ist in der Fig. 1 beispielhaft in das Werkzeugeinstell- und/oder Werkzeugmessgerät 10 integriert ausgebildet, insbesondere einstückig mit einer Recheneinheit 40 des Werkzeugeinstell- und/oder Werkzeugmessgeräts 10 ausgebildet. Alternativ könnte die Recheneinheit 40 auch getrennt von dem Werkzeugeinstell- und/oder Werkzeugmessgerät 10 ausgebildet sein und mit dem Werkzeugeinstell- und/oder Werkzeugmessgerät 10 in Verbindung stehen (z.B. Cloud-Computing). Die Recheneinheit 40 ist zumindest mit Hilfe der Kamera 20 zu einer Durchführung eines im Zusammenhang mit der Figur 6 beschriebenen Verfahrens, insbesondere computerimplementierten Verfahrens, vorzugsweise computerimplementierten Objekterkennungsverfahrens, insbesondere mittels eines Algorithmus maschinellen Lernens vorgesehen. Die Recheneinheit 40 umfasst ein gespeichertes Computerprogrammprodukt. Das Computerprogrammprodukt könnte auch auf externen Datenträgern oder in einer Computerprogramm-Recheninfrastruktur gespeichert sein. Das Computerprogrammprodukt umfasst ein Computerprogramm mit Befehlen, die bei einer Ausführung durch die Recheneinheit 40 diese veranlassen, die Schritte des beschriebenen Verfahrens auszuführen. Das Computerprogrammprodukt umfasst ein Computerprogramm mit Befehlen, die bei einer Ausführung durch die Recheneinheit 40 diese veranlassen, den Algorithmus maschinellen Lernens zur Erkennung von Objekten 18 in Kameraaufnahmen der Kamera 20 auszuführen.

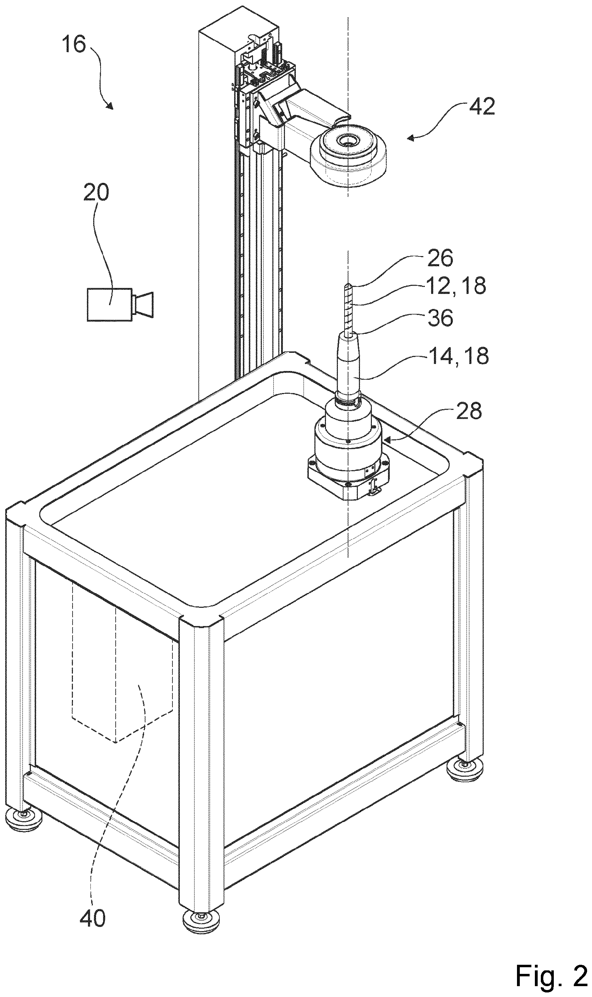

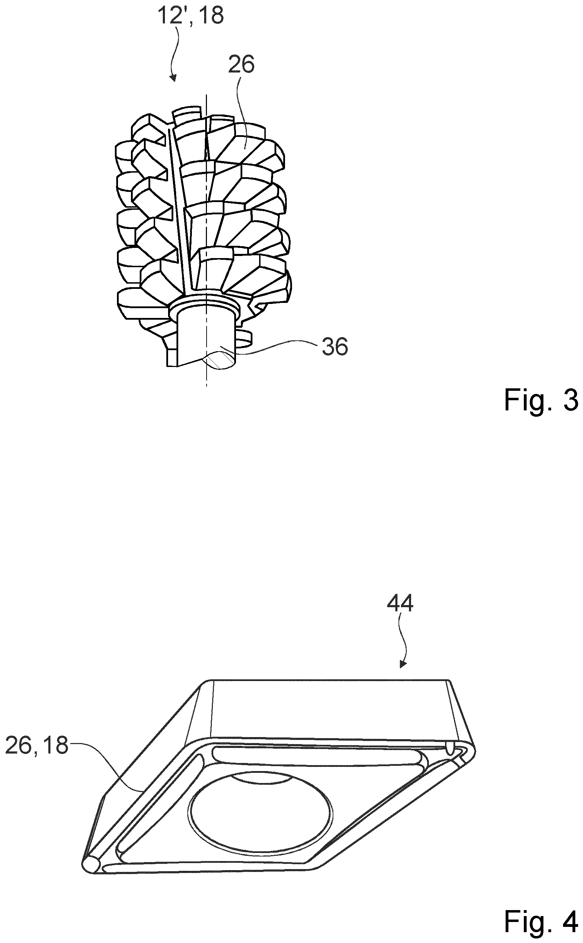

Die Figur 2 zeigt eine schematische perspektivische Darstellung eines Werkzeugspanngeräts 16. Das Werkzeugspanngerät 16 weist ebenfalls eine Kamera 20 auf. Das Werkzeugspanngerät 16 weist ebenfalls eine die oben genannten Eigenschaften umfassende Recheneinheit 40 auf. Das Werkzeugspanngerät 16 ist beispielhaft als ein Schrumpfspanngerät mit einer Induktionsspuleneinheit 42 zur Erhitzung von Spannbereichen von als Warmschrumpffutter ausgebildeten Werkzeugfuttern 14 ausgebildet. Das Werkzeugspanngerät 16 weist ebenfalls eine Halteeinrichtung 28 auf. Die Halteeinrichtung 28 ist zu einer Halterung der Werkzeugfutter 14 vorgesehen. Alternativ oder zusätzlich könnte die Halteeinrichtung 28 auch zu einer Halterung von Werkzeugen 12 vorgesehen sein. Außerdem könnte die Halteeinrichtung 28 zur Halterung von montierten Komplettwerkzeugen (nicht dargestellt, im Wesentlichen aber ähnlich zu der dargestellten montierten Kombination aus Werkzeug 12 und Werkzeugfutter 14 der Figur 2) oder eines Werkzeugs 12 eines demontierten Komplettwerkzeugs oder eines Werkzeugfutters 14 eines demontierten Komplettwerkzeugs vorgesehen sein. Im in der Fig. 2 dargestellten Fall ist ein Werkzeug 12 in das in der Halteeinrichtung 28 positionierte Werkzeugfutter 14 montiert. Das Werkzeug 12 ist im beispielhaft dargestellten Fall als ein Schaftwerkzeug, insbesondere als ein, einen Werkzeugschaft 36 und einen Schneidbereich mit einer Werkzeugschneide 26 aufweisendes Bohrwerkzeug, ausgebildet. In der Figur 3 ist beispielhaft ein alternatives, als Abwälzfräser ausgebildetes, Werkzeug 12' schematisch dargestellt. Der Abwälzfräser weist mehrere Werkzeugschneiden 26 auf. Bei den beispielhaft dargestellten Werkzeugen 12, 12' sind die Werkzeugschneiden 26 untrennbar mit dem Rest des Werkzeugs 12, 12' verbunden. Alternativ oder zusätzlich sind jedoch auch von dem Rest des Werkzeugs 12, 12' demontierbare Werkzeugschneiden 26, beispielsweise in Form von Wendeschneidplatten 44 (vgl. Fig. 4), denkbar. Die Figur 4 zeigt beispielhaft eine schematische perspektivische Darstellung einer Wendeschneidplatte 44 mit einer Werkzeugschneide 26.

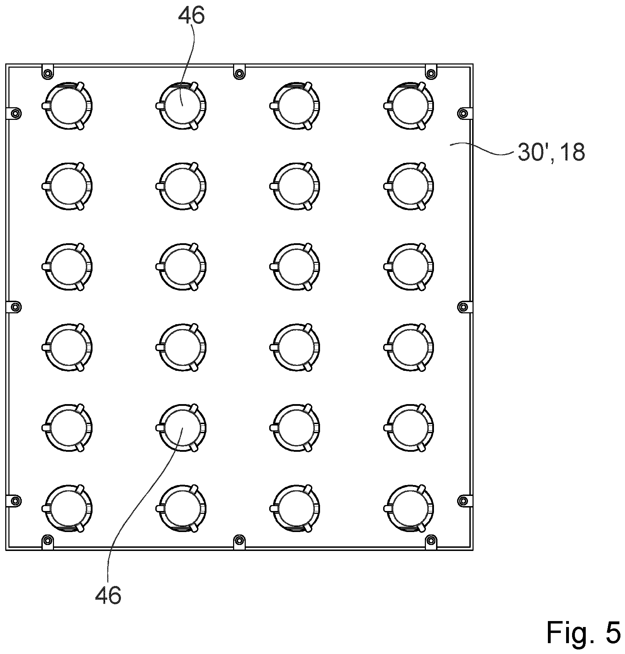

Alternativ oder zusätzlich ist außerdem denkbar, dass die Halteeinrichtung 28 des Werkzeugeinstell- und/oder Werkzeugmessgeräts 10 oder des Werkzeugspanngeräts 16 zu einer Halterung einer Werkzeug- und/oder Werkzeugfutterpalette 30 vorgesehen ist. Die Figur 5 zeigt eine schematische Draufsicht auf eine beispielhafte Werkzeug- und/oder Werkzeugfutterpalette 30. Die Werkzeug- und/oder Werkzeugfutterpalette 30 umfasst eine Mehrzahl an Halteplätzen 46 zur Halterung von Werkzeugen 12 und/oder Werkzeugfuttern 14. Die Halteplätze 46 der Werkzeug- und/oder Werkzeugfutterpalette 30 sind in einer gemeinsamen Ebene angeordnet. Die Halteplätze 46 der Werkzeug- und/oder Werkzeugfutterpalette 30 können wie in dem Beispiel der Figur 5 in geordneten Reihen und Spalten angeordnet sein.

Die Figur 6 zeigt ein schematisches Ablaufdiagramm eines Verfahrens mit dem Werkzeugeinstell- und/oder Werkzeugmessgerät 10. Das Werkzeugeinstell- und/oder Werkzeugmessgerät 10 ist zu einem Einstellen und/oder Vermessen der Werkzeuge 12, 12' in die/den Werkzeugfutter/n 14 vorgesehen. Das Verfahren ist alternativ auch mit dem Werkzeugspanngerät 16 durchführbar. Das Werkzeugspanngerät 16 ist zu einem Einspannen oder Ausspannen der Werkzeuge 12, 12' in oder aus die/den Werkzeugfutter/n 14 vorgesehen. Das Verfahren ist ein computerimplementiertes Verfahren. Das Verfahren ist ein computerimplementiertes Objekterkennungsverfahren. In zumindest einem Verfahrensschritt 50 werden ein oder mehrere Objekte 18 in ein Sichtfeld der Kamera 20 des Werkzeugeinstell- und/oder Werkzeugmessgeräts 10 oder des Werkzeugspanngeräts 16 verbracht.

In zumindest einem Erfassungsschritt 22 werden das oder die Objekte 18 in dem Sichtfeld der Kamera 20 durch die Kamera 20 erfasst. Die zur Durchführung des Erfassungsschritts 22 verwendete Kamera 20 wird bevorzugt zusätzlich für die Durchführung wenigstens einer Kernaufgabe des Werkzeugeinstell- und/oder Werkzeugmessgeräts 10 oder des Werkzeugspanngeräts 16 verwendet. In dem Erfassungsschritt 22 erstellt die Kamera 20 Kameraaufnahmen von dem oder den Objekten 18. In zumindest einem Objekterkennungsschritt 24 wird ein Bilderkennungsalgorithmus auf die das/die Objekt/e 18 umfassenden Kameraaufnahmen der Kamera 20 angewendet. Der Objekterkennungsschritt 24 ist zumindest zur Anwendung auf eines oder mehrere, vorzugsweise alle, der in der folgenden Liste genannten Objekte 18 speziell vorgesehen: a) Werkzeug 12, 12', b) Werkzeugfutter 14, c) Werkzeugschneide 26, d) montiertes Komplettwerkzeug, e) Werkzeug- und/oder Werkzeugfutterpalette 30. In dem Objekterkennungsschritt 24 wird mittels des Bilderkennungsalgorithmus bestimmt, ob es sich bei jedem der von der Kamera 20 erfassten Objekte 18 jeweils um ein einzelnes Werkzeug 12, 12', ein einzelnes Werkzeugfutter 14, eine Werkzeugschneide 26, ein montiertes Komplettwerkzeug oder eine Werkzeug- und/oder Werkzeugfutterpalette 30 handelt. Der Bilderkennungsalgorithmus kann somit zumindest ein als Werkzeug 12, 12' ausgebildetes Objekt 18 von anderen, nicht als Werkzeug 12, 12' ausgebildeten Objekten 18 unterscheiden. Der Bilderkennungsalgorithmus kann somit zumindest ein als Werkzeugfutter 14 ausgebildetes Objekt 18 von anderen, nicht als Werkzeugfutter 14 ausgebildeten Objekten 18 unterscheiden. Der Bilderkennungsalgorithmus kann somit zumindest ein als Werkzeugschneide 26, z.B. Wendeschneidplatte, ausgebildetes Objekt 18 von anderen, nicht als Werkzeugschneiden 26 ausgebildeten Objekten 18 unterscheiden. Der Bilderkennungsalgorithmus kann somit zumindest ein als montiertes Komplettwerkzeug ausgebildetes Objekt 18 von anderen, nicht als montierte Komplettwerkzeuge ausgebildeten Objekten 18 unterscheiden. Der Bilderkennungsalgorithmus kann somit zumindest ein als Werkzeug- und/oder Werkzeugfutterpalette 30 ausgebildetes Objekt 18 von anderen, nicht als Werkzeug- und/oder Werkzeugfutterpaletten 30 ausgebildeten Objekten 18 unterscheiden.

In dem Objekterkennungsschritt 24 wird eine Objektkategorie ermittelt. Die Objektkategorie umfasst zumindest einen Werkzeugtyp eines als Werkzeug 12, 12' erkannten Objekts 18, einen Werkzeugschneidentyp eines als Werkzeugschneide 26 erkannten Objekts 18, einen Werkzeugfuttertyp eines als Werkzeugfutter 14 erkannten Objekts 18, einen Komplettwerkzeugtyp eines als Komplettwerkzeug erfassten Objekts 18 und/oder einen Palettentyp eines als Werkzeug- und/oder Werkzeugfutterpalette 30 erfassten Objekts 18. Die Objektkategorie kann zumindest teilweise anhand eines Nicht-Vorhandenseins bestimmter Merkmale, insbesondere bestimmter Farbmerkmale und/oder bestimmter Schwarz-Weiß-Muster oder Farbmuster, bestimmt werden. Die Objektkategorie kann zumindest teilweise anhand einer Farberkennung, insbesondere einer Werkzeugschneiden-Farbe, einer Werkzeugfutter-Farbe, einer Werkzeug-Farbe oder einer Komplettwerkzeug-Farbe, bestimmt werden. Die Objektkategorie kann zumindest teilweise anhand einer physischen Abmessung bestimmt werden. Die Objektkategorie kann zumindest teilweise anhand eines Auffindens typischer optischer Verschleißerscheinungen und/oder typischer Verschmutzungen des Objekts 18, insbesondere der Werkzeugschneide 26, des Werkzeugfutters 14 oder des Werkzeugs 12, 12', bestimmt werden.

In einem Auswertungsschritt 34 wird eine Kompatibilität oder Inkompatibilität von zumindest zweien der in dem Objekterkennungsschritt 24 erkannten Objekte 18 zueinander ermittelt. In dem Objekterkennungsschritt 24 können mehrere Objekte 18 gleichzeitig oder nacheinander anhand von Kameraaufnahmen erfasst werden. In dem Auswertungsschritt 34 wird ermittelt, ob es sich bei zumindest zwei der in dem Objekterkennungsschritt 24 erkannten zueinander kompatiblen Objekte 18 um miteinander lösbar verbindbare Objekte 18 handelt. In dem Auswertungsschritt 34 wird ermittelt, ob ein erkanntes Werkzeug 12, 12' zu einem erkannten Werkzeugfutter 14 kompatibel ist, also beispielsweise ob der Werkzeugschaft 36 des Werkzeugs 12, 12' in das Werkzeugfutter 14 passt. In dem Auswertungsschritt 34 wird ermittelt, ob eine erkannte Werkzeugschneide 26 zu einem erkannten Werkzeug 12, 12' passt, also beispielsweise ob die Werkzeugschneide 26 an das Werkzeug 12, 12' montiert werden kann. In dem Auswertungsschritt 34 wird ermittelt, ob ein erkanntes Werkzeug 12, 12', ein erkanntes Werkzeugfutter 14 oder ein erkanntes montiertes Komplettwerkzeug in eine oder mehrere Halteplätze 46 einer erkannten Werkzeug- und/oder Werkzeugfutterpalette 30 passt. In dem Auswertungsschritt 34 wird zudem erkannt, ob ein Objekt 18, beispielsweise ein als Werkzeug 12, 12', als Werkzeugfutter 14 oder als Werkzeugschneide 26 erkanntes Objekt 18, zu einer dem Werkzeugeinstell- und/oder Werkzeugmessgerät 10 oder dem Werkzeugspanngerät 16 vorliegenden Arbeitsplanung, beispielsweise eines Werkzeugverwaltungssystems, passt.

In zumindest einem Ausgabeschritt 32 wird zumindest eine Information zu jedem bestimmten Objekt 18 elektronisch oder visuell ausgegeben. In dem Ausgabeschritt 32 wird eine Identifikationsinformation zu jedem bestimmten Objekt 18 elektronisch oder visuell ausgegeben. In dem Ausgabeschritt 32 wird der Werkzeugtyp, der Werkzeugschneidentyp, der Werkzeugfuttertyp, der Komplettwerkzeugtyp und/oder der Palettentyp zu jedem bestimmten Objekt 18 elektronisch oder visuell ausgegeben. Die elektronische Ausgabe kann beispielsweise als Ausgabe eines maschinenlesbaren Codes, z.B. an eine Werkzeugmaschine, umgesetzt sein. Die visuelle Ausgabe kann beispielsweise über eine Anzeigeeinheit (nicht dargestellt), wie einen Bildschirm, des Werkzeugeinstell- und/oder Werkzeugmessgeräts 10 oder des Werkzeugspanngeräts 16 erfolgen. Die visuelle Ausgabe ist für den jeweiligen Bediener optisch wahrnehmbar. In dem Ausgabeschritt 32 wird ein Vorschlag für eine Änderung der Arbeitsplanung, beispielsweise des Werkzeugverwaltungssystems für eine oder mehrere Werkzeugmaschinen, für ein oder mehrere Werkzeugspanngeräte 16 oder für ein oder mehrere Werkzeugeinstell- und/oder Werkzeugmessgeräte 10, oder eine direkte Änderung der Arbeitsplanung ausgegeben, wenn in dem zuvor durchgeführten Auswertungsschritt 34 eine Nicht-Übereinstimmung des aktuell erkannten Objekts 18 mit einem nach der vorliegenden Arbeitsplanung eingeplanten Objekt 18 ermittelt wurde. In dem Ausgabeschritt 32 wird eine Warnmeldung ausgegeben, wenn laut der Arbeitsplanung, beispielsweise des Werkzeugverwaltungssystems für ein oder mehrere Werkzeugspanngeräte 16, das aktuell vorliegende Werkzeugfutter 14 ein Warmschrumpffutter sein müsste, in dem Objekterkennungsschritt 24 jedoch ein anderer Werkzeugfuttertyp, insbesondere der Werkzeugfuttertyp Hydrodehn-Spannfutter, ermittelt wurde. In dem Ausgabeschritt 32 wird eine Warnmeldung ausgegeben, wenn laut der Arbeitsplanung, beispielsweise des Werkzeugverwaltungssystems für ein oder mehrere Werkzeugspanngeräte 16, ein anschließendes Warmschrumpfen des aktuell vorliegenden Werkzeugfutters 14 geplant ist, in dem Objekterkennungsschritt 24 jedoch ein anderer Werkzeugfuttertyp, insbesondere der Werkzeugfuttertyp Hydrodehn-Spannfutter, ermittelt wurde. Alternativ oder zusätzlich zu der Warnmeldung wird in dem Ausgabeschritt 32 der Betrieb des Werkzeugspanngeräts 16 automatisch blockiert und/oder pausiert.

In zumindest einem Arbeitsschritt 48 wird einem Nutzer / Bediener des Werkzeugeinstell- und/oder Werkzeugmessgeräts 10 oder des Werkzeugspanngeräts 16 automatisch eine zu der oder den ermittelten Objektkategorien des oder der aktuell vorliegenden Objekte 18 passende Bedienmaske und/oder Bedienoberfläche des Werkzeugeinstell- und/oder Werkzeugmessgeräts 10 oder des Werkzeugspanngeräts 16 angezeigt. Die Bedienmaske kann in dem Arbeitsschritt 48 bereits automatisch teilausgefüllt werden.

Der Bilderkennungsalgorithmus ist als ein speziell auf die Erkennung von Werkzeugen 12, 12', Werkzeugfuttern 14, Werkzeugschneiden 26, montierten Komplettwerkzeugen und/oder Werkzeug- und/oder Werkzeugfutterpaletten 30 trainierter Algorithmus maschinellen Lernens ausgebildet. Der trainierte Algorithmus maschinellen Lernens ist ein CNN-Algorithmus. Der trainierte Algorithmus maschinellen Lernens ist ein Objekterkennungs- und/oder Objektklassifizierungsalgorithmus. Der Algorithmus maschinellen Lernens weist eine Anomalie-Erkennungsfunktion zur Erkennung von optisch erkennbaren Anomalien bei den während dem Erfassungsschritt 22 im Sichtfeld der Kamera 20 erfassten Objekten 18 auf.

In einem Trainierschritt 38 wird der Algorithmus maschinellen Lernens durch eine, die in dem Ausgabeschritt 32 ausgegebene Information bestätigende, korrigierende oder dementierende Rückmeldung weiter trainiert. Die Rückmeldung ist eine Bedienerrückmeldung. Der Bediener kann die Bedienerrückmeldung beispielsweise mittels einer Bestätigung oder Ablehnung der visuellen Ausgabe oder der in dem Arbeitsschritt 48 vorgeschlagenen Bedienmaske erzeugen.

In zumindest einem Verfahrensschritt 52 wird das Werkzeugeinstell- und/oder Werkzeugmessgerät 10 oder das Werkzeugspanngerät 16 unter Verwendung der in den vorhergehenden Schritten des Verfahrens ermittelten Informationen betrieben.

### Bezugszeichen

- 10: Werkzeugeinstell- und/oder Werkzeugmessgerät
- 12: Werkzeug
- 14: Werkzeugfutter
- 16: Werkzeugspanngerät
- 18: Objekt
- 20: Kamera
- 22: Erfassungsschritt
- 24: Objekterkennungsschritt
- 26: Werkzeugschneide
- 28: Halteeinrichtung
- 30: Werkzeug- und/oder Werkzeugfutterpalette
- 32: Ausgabeschritt
- 34: Auswertungsschritt
- 36: Werkzeugschaft
- 38: Trainierschritt
- 40: Recheneinheit
- 42: Induktionsspuleneinheit
- 44: Wendeschneidplatte
- 46: Halteplatz
- 48: Arbeitsschritt
- 50: Verfahrensschritt
- 52: Verfahrensschritt

## Patentansprüche

1. Verfahren, insbesondere computerimplementiertes Verfahren, vorzugsweise computerimplementiertes Objekterkennungsverfahren, mit zumindest einem Werkzeugeinstell- und/oder Werkzeugmessgerät (10) zu einem Einstellen und/oder Vermessen von Werkzeugen (12, 12') in Werkzeugfuttern (14) oder mit zumindest einem Werkzeugspanngerät (16) zu einem Einspannen oder Ausspannen von Werkzeugen (12, 12') in oder aus Werkzeugfuttern (14),
wobei in zumindest einem Erfassungsschritt (22) ein oder mehrere Objekte (18) in einem Sichtfeld einer Kamera (20) des Werkzeugeinstell- und/oder Werkzeugmessgeräts (10) oder des Werkzeugspanngeräts (16) erfasst werden, und
wobei in zumindest einem Objekterkennungsschritt (24) ein Bilderkennungsalgorithmus auf das/die Objekt/e (18) umfassende Kameraaufnahmen der Kamera (20) angewendet wird,
**dadurch gekennzeichnet, dass** der Objekterkennungsschritt (24) zumindest zur Anwendung auf in der folgenden Liste genannte Objekte (18) speziell vorgesehen ist:
- Werkzeug (12, 12'),
- Werkzeugfutter (14),
- Werkzeugschneide (26),
- montiertes Komplettwerkzeug,
- Werkzeug- und/oder Werkzeugfutterpalette (30).

2. Verfahren nach dem Oberbegriff des Anspruchs 1, insbesondere nach dem Anspruch 1, **dadurch gekennzeichnet, dass** in dem Objekterkennungsschritt (24) mittels des Bilderkennungsalgorithmus bestimmt wird, ob es sich bei dem/den von der Kamera (20) erfassten Objekt/en (18) jeweils um ein einzelnes Werkzeug (12, 12'), ein einzelnes Werkzeugfutter (14), eine Werkzeugschneide (26), ein montiertes Komplettwerkzeug oder eine Werkzeug- und/oder Werkzeugfutterpalette (30) handelt, und
wobei in zumindest einem Ausgabeschritt (32) zumindest eine Information, insbesondere eine Identifikationsinformation, zu jedem bestimmten Objekt (18) elektronisch oder visuell ausgegeben wird.

3. Verfahren nach Anspruch 2, **dadurch gekennzeichnet, dass** in dem Objekterkennungsschritt (24) eine Objektkategorie ermittelt wird, welche zumindest einen Werkzeugtyp eines als Werkzeug (12, 12') erkannten Objekts (18), einen Werkzeugschneidentyp eines als Werkzeugschneide (26) erkannten Objekts (18), einen Werkzeugfuttertyp eines als Werkzeugfutter (14) erkannten Objekts (18), einen Komplettwerkzeugtyp eines als Komplettwerkzeug erfassten Objekts (18) und/oder einen Palettentyp eines als Werkzeug- und/oder Werkzeugfutterpalette (30) erfassten Objekts (18) umfasst und dass in dem Ausgabeschritt (32) der Werkzeugtyp, der Werkzeugschneidentyp, der Werkzeugfuttertyp, der Komplettwerkzeugtyp und/oder der Palettentyp zu jedem bestimmten Objekt (18) elektronisch oder visuell ausgegeben wird.

4. Verfahren nach Anspruch 3, **gekennzeichnet durch** einen Auswertungsschritt (34), in dem eine Kompatibilität oder Inkompatibilität von zumindest zweien der in dem Objekterkennungsschritt (24) erkannten Objekte (18) zueinander ermittelt wird.

5. Verfahren nach Anspruch 4, **dadurch gekennzeichnet, dass** in dem Auswertungsschritt (34) ermittelt wird, ob es sich bei zumindest zwei der in dem Objekterkennungsschritt (24) erkannten zueinander kompatiblen Objekte (18) um miteinander lösbar verbindbare Objekte (18) handelt.

6. Verfahren nach Anspruch 4 oder 5, **dadurch gekennzeichnet, dass** in dem Auswertungsschritt (34) erkannt wird, ob ein Werkzeugschaft (36) eines als einzelnes Werkzeug (12, 12') erkannten Objekts (18) zu einem als einzelnes Werkzeugfutter (14) erkannten weiteren Objekt (18) kompatibel ist.

7. Verfahren nach einem der Ansprüche 4 bis 6, **dadurch gekennzeichnet, dass** in dem Auswertungsschritt (34) erkannt wird, ob ein als Werkzeugschneide (26), insbesondere als Wendeschneidplatte (44), erkanntes Objekt (18) zu einem als einzelnes Werkzeug (12, 12') erkannten weiteren Objekt (18) kompatibel ist.

8. Verfahren nach einem der Ansprüche 4 bis 7, **dadurch gekennzeichnet, dass** in dem Auswertungsschritt (34) erkannt wird, ob ein Objekt (18), beispielsweise ein als Werkzeug (12, 12'), als Werkzeugfutter (14) oder als Werkzeugschneide (26) erkanntes Objekt (18), zu einer dem Werkzeugeinstell- und/oder Werkzeugmessgerät (10) oder dem Werkzeugspanngerät (16) vorliegenden Arbeitsplanung, beispielsweise eines Werkzeugverwaltungssystems, passt.

9. Verfahren nach dem Anspruch 8, **dadurch gekennzeichnet, dass** in dem Ausgabeschritt (32) ein Vorschlag für eine Änderung der Arbeitsplanung oder eine direkte Änderung der Arbeitsplanung ausgegeben wird, wenn in dem Auswertungsschritt (34) eine Nicht-Übereinstimmung des aktuell erkannten Objekts (18) mit der vorliegenden Arbeitsplanung ermittelt wurde.

10. Verfahren nach dem Anspruch 8 oder 9, **dadurch gekennzeichnet, dass** in dem Ausgabeschritt (32) eine Warnmeldung ausgegeben wird und/oder ein Betrieb des Werkzeugspanngeräts (16) blockiert wird, wenn laut der Arbeitsplanung das aktuell vorliegende Werkzeugfutter (14) ein Warmschrumpffutter sein müsste oder wenn laut dem Arbeitsplan ein anschließendes Warmschrumpfen des aktuell vorliegenden Werkzeugfutters (14) geplant ist, in dem Objekterkennungsschritt (24) jedoch ein anderer Werkzeugfuttertyp, insbesondere der Werkzeugfuttertyp Hydrodehn-Spannfutter, ermittelt wurde.

11. Verfahren nach einem der Ansprüche 3 bis 10, **dadurch gekennzeichnet, dass** die Objektkategorie zumindest teilweise anhand eines Nicht-Vorhandenseins bestimmter Merkmale, insbesondere bestimmter Farbmerkmale und/oder bestimmter Schwarz-Weiß-Muster oder Farbmuster, bestimmt wird.

12. Verfahren nach einem der Ansprüche 3 bis 11, **dadurch gekennzeichnet, dass** die Objektkategorie zumindest teilweise anhand einer Farberkennung, insbesondere einer Werkzeugschneiden-Farbe, einer Werkzeugfutter-Farbe, einer Werkzeug-Farbe oder einer Komplettwerkzeug-Farbe, bestimmt wird.

13. Verfahren nach einem der Ansprüche 3 bis 12, **dadurch gekennzeichnet, dass** die Objektkategorie zumindest teilweise anhand einer physischen Abmessung bestimmt wird.

14. Verfahren nach einem der Ansprüche 3 bis 13, **dadurch gekennzeichnet, dass** die Objektkategorie zumindest teilweise anhand eines Auffindens typischer optischer Verschleißerscheinungen und/oder typischer Verschmutzungen des Objekts (18), insbesondere der Werkzeugschneide (26), des Werkzeugfutters (14) oder des Werkzeugs (12, 12'), bestimmt wird.

15. Verfahren nach einem der Ansprüche 3 bis 14, **dadurch gekennzeichnet, dass** in zumindest einem Arbeitsschritt (48) einem Nutzer des Werkzeugeinstell- und/oder Werkzeugmessgeräts (10) oder des Werkzeugspanngeräts (16) automatisch eine zu der oder den ermittelten Objektkategorien des oder der aktuell vorliegenden Objekte (18) passende, vorzugsweise bereits zumindest teilausgefüllte, Bedienmaske und/oder Bedienoberfläche des Werkzeugeinstell- und/oder Werkzeugmessgeräts (10) oder des Werkzeugspanngeräts (16) angezeigt wird.

16. Verfahren nach einem der vorhergehenden Ansprüche, **dadurch gekennzeichnet, dass** der Bilderkennungsalgorithmus als ein speziell auf die Erkennung von Werkzeugen (12, 12'), Werkzeugfuttern (14), Werkzeugschneiden (26), montierten Komplettwerkzeugen und/oder Werkzeug- und/oder Werkzeugfutterpaletten (30) trainierter Algorithmus maschinellen Lernens ausgebildet ist.

17. Verfahren nach Anspruch 16, **gekennzeichnet durch** einen Trainierschritt (38), in welchem der Algorithmus maschinellen Lernens durch eine, die in dem Ausgabeschritt (32) ausgegebene Information bestätigende, korrigierende oder dementierende Rückmeldung, insbesondere Bedienerrückmeldung, weiter trainiert wird.

18. Verfahren nach Anspruch 16 oder 17, **dadurch gekennzeichnet, dass** der Algorithmus maschinellen Lernens eine Anomalie-Erkennungsfunktion zur Erkennung von, insbesondere optisch erkennbaren, Anomalien bei den während dem Erfassungsschritt (22) im Sichtfeld der Kamera (20) erfassten Objekten (18) aufweist.

19. Verfahren nach einem der vorhergehenden Ansprüche, **dadurch gekennzeichnet, dass** die zur Durchführung des Erfassungsschritts (22) verwendete Kamera (20) zusätzlich für die Durchführung wenigstens einer Kernaufgabe des Werkzeugeinstell- und/oder Werkzeugmessgeräts (10) oder des Werkzeugspanngeräts (16) verwendet wird.

20. Werkzeugeinstell- und/oder Werkzeugmessgerät (10) mit zumindest einer Kamera (20), insbesondere einer Einstell- und/oder Messkamera, und mit zumindest einer Recheneinheit (40), **dadurch gekennzeichnet, dass** zumindest die Recheneinheit (40) zumindest mit Hilfe der Kamera (20), insbesondere der Einstell- und/oder Messkamera, zu einer Durchführung des Verfahrens, insbesondere des computerimplementierten Verfahrens, vorzugsweise des computerimplementierten Objekterkennungsverfahrens, nach einem der vorhergehenden Ansprüche, insbesondere mit dem Algorithmus maschinellen Lernens nach einem der Ansprüche 16 bis 18, vorgesehen ist.

21. Werkzeugspanngerät (16) mit zumindest einer Kamera (20) und mit zumindest einer Recheneinheit (40), **dadurch gekennzeichnet, dass** zumindest die Recheneinheit (40) zumindest mit Hilfe der Kamera (20) zu einer Durchführung des Verfahrens, insbesondere des computerimplementierten Verfahrens, vorzugsweise des computerimplementierten Objekterkennungsverfahrens, nach einem der Ansprüche 1 bis 19, insbesondere mit dem Algorithmus maschinellen Lernens nach einem der Ansprüche 16 bis 18, vorgesehen ist.

22. Computerprogrammprodukt und/oder Computerprogramm-Recheninfrastruktur, umfassend Befehle, die bei einer Ausführung des Computerprogramms durch eine Recheneinheit (40), vorzugsweise eines Werkzeugeinstell- und/oder Werkzeugmessgeräts (10) nach Anspruch 20 oder eines Werkzeugspanngeräts (16) nach Anspruch 21, diese veranlassen, die Schritte des Verfahrens, insbesondere des computerimplementierten Verfahrens, vorzugsweise des computerimplementierten Objekterkennungsverfahrens, nach einem der Ansprüche 1 bis 19, insbesondere mit dem Algorithmus maschinellen Lernens nach einem der Ansprüche 16 bis 18, auszuführen.
